## Europäisches Patentamt

(19) ## European Patent Office

## Office européen des brevets

(11) Veröffentlichungsnummer: **0 058 930**
**B1**

(12) # EUROPÄISCHE PATENTSCHRIFT

(45) Veröffentlichungstag der Patentschrift:
08.05.85

(51) Int. Cl.⁴: **C 08 L 71/04, C 08 L 51/04**

(21) Anmeldenummer: 82101167.3

(22) Anmeldetag: 17.02.82

(54) **Thermoplastische Formmassen.**

(30) Priorität: 24.02.81 DE 3106747

(43) Veröffentlichungstag der Anmeldung:
01.09.82 Patentblatt 82/35

(45) Bekanntmachung des Hinweises auf die Patenterteilung:
08.05.85 Patentblatt 85/19

(84) Benannte Vertragsstaaten:
BE DE FR GB NL

(56) Entgegenhaltungen:
DE - A - 2 211 005

(73) Patentinhaber: BASF Aktiengesellschaft,
Carl-Bosch-Strasse 38, D-6700 Ludwigshafen (DE)

(72) Erfinder: Brandstetter, Franz, Dr., Ritterbuechel 45,
D-6730 Neustadt (DE)
Erfinder: Echte, Adolf, Dr., Leuschnerstrasse 42,
D-6700 Ludwigshafen (DE)
Erfinder: Haaf, Franz, Dr., Leistadter Strasse 9,
D-6702 Bad Duerkheim (DE)
Erfinder: Naarmann, Herbert, Dr., Haardtblick 15,
D-6719 Wattenheim (DE)
Erfinder: Priebe, Edmund, Dr., Bensheimer Ring 7A,
D-6710 Frankenthal (DE)

**Beschreibung**

Die Erfindung betrifft thermoplastische Formmassen auf der Grundlage von schlagfest modifizierten Styropolymerisaten und Polyphenylenethern.

Thermoplastische Massen, die sich zur Herstellung von Formteilen eignen und die schlagzäh modifizierte Styrolpolymerisate und Polyphenylenether enthalten sind z. B. aus den US-Patentschriften 3 383 435, 4 128 602 sowie der DE-AS 22 11 005 bekannt. Solche Formmassen eignen sich zur Herstellung von Formteilen, die sich im Vergleich zu schlagzäh modifizierten Styrolpolymerisaten, die nicht mit Polyphenylenethern abgemischt sind, durch eine bessere Wärmeformbeständigkeit auszeichnen. Die Materialeigenschaften derartiger Formmassen sind im allgemeinen zufriedenstellend, doch hat es sich gezeigt, daß die Massen eine unbefriedigende Zähigkeit in der Kälte haben.

Der vorliegenden Erfindung lag daher die Aufgabe zugrunde, thermoplastische Formmassen auf der Grundlage von schlagfest modifizierten Styrolpolymerisaten und Polyphenylenethern zu schaffen, die in der Kälte eine gute Zähigkeit haben.

Diese Aufgabe wird erfindungsgemäß gelöst durch Formmassen, bei denen der Anteil der Weichkomponente im verwendeten schlagfest modifizierten Styrolpolymerisat zwischen 27 und 40 Gew.-%, bezogen auf das schlagfest modifizierte Polymerisat liegt, wobei unter Weichkomponente der in Methylethylketon/Aceton (Volumenverhältnis 1 : 1) unlösliche Anteil des schlagfest modifizierten Polystyrols (abzüglich etwaiger Pigmente) verstanden wird.

Gegenstand der Erfindung sind dementsprechend thermoplastische Formmassen, enthaltend

A   90 bis 10 Gew.-Teile wenigstens eines schlagfest modifizierten Styrolpolymerisats,
B   10 bis 90, insbesondere 20 bis 80 Gew.-Teile eines Polyphenylenethers, sowie
C   — gegebenenfalls — einschlägig übliche Zusatzstoffe in wirksamen Mengen.

Die erfindungsgemäßen Formmassen sind dadurch gekennzeichnet, daß der Anteil an Weichkomponente im schlagfest modifizierten Styrolpolymerisat A zwischen 27 und 40 Gew.-%, bezogen auf das schlagfest modifizierte Polymerisat, liegt, wobei unter Weichkomponente der in Methylethylketon/Aceton (Volumenverhältnis 1 : 1) unlösliche Anteil des schlagfest modifizierten Polystyrols verstanden wird.

Unter Formmassen sollen Mischungen verstanden werden, die sich durch thermoplastische Verarbeitung innerhalb bestimmter Temperaturbereiche zu Formteilen oder zu Halbzeug verarbeiten lassen. Die Formmassen können als Granulat vorliegen, so können aber auch pulverförmig oder durch Tablettierung vorgeformt oder in Form von Platten und Bahnen vorliegen.

Die Herstellung der in den Formmassen enthaltenen schlagfest modifizierten Styrolpolymerisate kann nach beliebigen Verfahren erfolgen, sofern dafür gesorgt ist, daß sich ein Anteil an Weichkomponente von 27 bis 40 Gew.-% ergibt. Besonders geeignet sind dabei schlagfest modifizierte Styrolpolymerisate mit einem Weichkomponentenanteil von 29 bis 40 Gew.-%.

Die thermoplastischen Formmassen können schlagfest modifizierte Styrolpolymerisate und Polyphenylenethern in beliebigen Mengen, beispielsweise in Mengen von 10 bis 90 Gew.-% Styrolpolymerisat und 90 bis 10 Gew.-% Polyphenylenether enthalten. Für die Herstellung von Formteilen eignen sich insbesondere solche Formmassen, die 20 bis 80 Gew.-% schlagfest modifizierte Styrolpolymerisate und 80 bis 20 Gew.-% Polyphenylenether enthalten.

Die meist angewandten Verfahren zur Herstellung schlagzäh modifizierter Styrolpolymerisate sind die Polymerisation in Masse oder Lösung, wie es beispielsweise in der US-PS 2 694 692 beschrieben ist und Verfahren zur Masse-Suspensionspolymerisation, wie sie beispielsweise in der US-PS 2 862 906 beschrieben sind. Selbstverständlich sind auch andere Verfahren anwendbar, sofern die obengenannte Teilchengrößenkombination eingestellt wird.

Als monovinylaromatische Verbindungen kommen dabei insbesondere Styrol in Betracht, ferner die kern- oder seitenkettenalkylierten Styrole. Vorzugsweise wird jedoch Styrol allein verwendet.

Als Kautschuke werden die üblicherweise für die Schlagfestmodifizierung von Styrolpolymerisaten gebräuchlichen natürlichen oder synthetischen Kautschuke eingesetzt. Geeignete Kautschuke im Sinne der Erfindung sind neben Naturkautschuk z. B. Polybutadien, Polyisopren und Mischpolymerisate des Butadiens und/oder Isoprens mit Styrol. Besonders eignen sich Butadien-Polymerisate mit einem 1,4-cis-Gehalt der zwischen 25 und 98 liegt.

Die Herstellung der schlagfest modifizierten Polymerisate mit dem erfindungsgemäßen Eigenschaftsbild geschieht durch Polymerisation der monovinylaromatischen Verbindungen in Gegenwart des Kautschuks. Die Polymerisation erfolgt, wie erwähnt, dabei in der Regel in an sich bekannter Weise in Masse, Lösung oder wäßriger Dispersion, wobei zunächst der Kautschuk in den polymerisierbaren Monomeren gelöst und diese Ausgangslösung polymerisiert wird.

Bei der Lösungs-Polymerisation können dieser Ausgangslösung noch bis zu maximal 50 Gewichtsprozent, bezogen auf die eingesetzten monovinylaromatischen Verbindungen, eines indifferenten Verdünnungsmittels zugesetzt werden. Als indifferente Verdünnungsmittel sind beispielsweise aromatische Kohlenwasserstoffe oder Gemische von aromatischen Kohlenwasserstoffen geeignet. Bevorzugt werden dabei Toluol, Ethylbenzol, die Xylole oder Gemische dieser Verbindungen.

Bei der Polymerisation in wäßriger Dispersion wird im allgemeinen auf den Zusatz von Lösungsmitteln verzichtet; eine besonders günstige Ausführungsform besteht darin, die Lösung des Kautschuks in den Monomeren bis zu einem Umsatz von etwa 45% in Masse unter Einwirkung von Scherkräften vorzupolymerisieren, diese Reaktionsmasse dann in Wasser zu suspendieren und anschließend auszupolymerisieren. Im allgemeinen wird dieses Verfahren unter Zugabe öllöslicher, in Radikale zerfallender Initiatoren wie Benzoylperoxid, Dicumylperoxid, Di-tert.-butylperoxid, Azo-diisobutyronitril u. ä. oder Kombinationen davon ausgelöst, doch kann die Vorpolymerisation auch thermisch gestartet werden. Als Suspendiermittel dienen bekanntlich wasserlösliche, hochmolekulare Verbindungen wie Methylcellulose, Oxypropylcellulose, Polyvinylalkohol, teilverseifte Polyvinylacetate usw. oder anorganische Dispergiermittel, z. B. von Bariumsulfat. Die Suspendiermittel werden im allgemeinen in Mengen von 0,1 bis 5 Gew.-%, bezogen auf die organische Phase eingesetzt.

Bei der Polymerisation in Masse oder Lösung wird in der Regel in einem Temperaturbereich zwischen 50 und 250°C, vorzugsweise 100 bis 200°C, polymerisiert. Der Polymerisationsansatz muß dabei mindestens im ersten Abschnitt der Polymerisation, d. h. bis zu Umsätzen der monovinylaromatischen Verbindungen gleich oder kleiner 45 Gew.-% gut gerührt werden. Alle diese Polymerisationsverfahren sind hinreichend bekannt und in Einzelheiten in der Literatur beschrieben. Eine zusammenfassende Darstellung findet sich bei Amos, Polym. Engng. Sci., 14 (1974), 1. S. 1 bis 11, sowie in den US-Patentschriften 2 694 692 und 2 862 906 auf die wegen weiterer Einzelheiten verwiesen werden soll.

Unter Weichkomponente im Sinne dieser Erfindung wird der bei Raumtemperatur (25°C) in Methylethylketan/Aceton (Volumenverhältnis 1 : 1) unlösliche Anteil des schlagfest modifizierten Polymerisats abzüglich etwaiger Pigmente verstanden. Die Weichkomponente entspricht also dem Gelanteil des Produktes.

Die Weichkomponente ist im allgemeinen heterogen aufgebaut; sie bildet sich in der Regel im Laufe des Herstellprozesses aus und wird in der Menge und im Zerteilungsgrad durch die Verfahrensbedingungen beeinflußt. Die zu polymerisierende Lösung des Kautschuks in den monovinylaromatischen Monomeren trennt sich bekanntlich unmittelbar nach Einsetzen der Reaktion in zwei Phasen, von denen die eine, eine Lösung des Kautschuks in monomeren Vinylaromaten, zunächst die kokärente Phase bildet, während die zweite, eine Lösung des Polyvinylaromaten in seinem eigenen Monomeren, in ihr in Tröpfchen suspendiert bleibt. Mit steigendem Umsatz vermehrt sich die Menge der zweiten Phase auf Kosten der ersten und unter Verbrauch der Monomeren; dabei tritt ein Wechsel der Phasenkohärenz auf. Bei diesem bilden sich Tropfen von Kautschuklösung in Polyvinylaromatlösung aus; diese Tropfen halten aber ihrerseits kleinere Tropfen der jetzt äußeren Phase eingeschlossen.

Neben diesem Vorgang läuft eine Pfropfreaktion ab, bei der chemische Verknüpfungen zwischen den Kautschukmolekülen und den Polyvinylaromaten unter Bildung von Pfropf-Copolymeren aus beiden Bestandteilen gebildet werden. Dieser Vorgang ist bekannt und z. B. bei Fischer, Die angew. Makrom. Chem. 33 (1973), S. 35 bis 74, ausführlich dargestellt.

Sowohl der aufgepfropfte als auch der mechanisch eingeschlossene Anteil des Polyvinylaromaten in den Kautschukteilchen ist zur Weichkomponente zu rechnen.

Wenn die Masse ganz durchpolymerisiert ist, ist so eine in eine harte Matrix aus dem Polyvinylaromaten eingelagerte heterogene Weichkomponente entstanden, die aus gepfropften Kautschukteilchen mit Einschlüssen aus Matrixmaterial (Polyvinylaromat) besteht. Je größer die Menge des eingeschlossenen Matrix-Materials ist, um so größer ist bei konstantem Kautschukgehalt die Menge der Weichkomponente.

Diese richtet sich also nicht nur nach der Menge des eingesetzten Kautschuks, sondern auch nach der Prozeßführung besonders vor und während der Phaseninversion. Die Einzelmaßnahmen sind prozeßspezifisch und dem Fachmann bekannt (siehe z. B. Freeguard, Brit. Polym. J. 6 [1974] S. 203 bis 228; Wagner, Robeson, Rubber Chem. Techn. 43 [1970], 1129 ff).

Um zu schlagfesten thermoplastischen Formmassen mit den erfindungsgemäßen Eigenschaftsmerkmalen zu gelangen, wird die Menge an Kautschuk, die vor der Polymerisation in den Monomeren unter Herstellung der Ausgangslösung gelöst wird, in Abhängigkeit von dem Endumsatz bei der Polymerisation so gewählt, daß der Weichkomponentengehalt im resultierenden schlagfest modifizierten Polymerisat der monovinylaromatischen Verbindungen zwischen 27 Gew.-%, vorzugsweise 29 Gew.-% und 40 Gew.-%, bezogen auf das schlagfest modifizierte Polymerisat, beträgt. Der Kautschuk-Anteil des schlagfest modifizierten Polymerisats beträgt dann im allgemeinen zwischen 2 und 15 Gew.-%, vorzugsweise von 5 bis 12 Gew.-%.

Wie dargelegt und hinreichend bekannt, bestehen die schlagfest modifizierten Polymerisate der monovinylaromatischen Verbindungen aus einer einheitlichen umhüllenden Phase (Matrix) aus dem Polymerisat der monovinylaromatischen Verbindung, in die als disperse Phase die Kautschukteilchen der Weichkomponente eingebettet sind, wobei die Kautschuk-Teilchen partiell vernetzt und in mehr oder weniger starkem Maße während der Polymerisation durch die monovinylaromatischen Verbindungen gepfropft worden sind.

Die Bestimmung der mittleren Teilchengröße der dispersen Weichkomponente kann z. B. durch Auszählung und Auswertung elektronenmikroskopischer Dünnschnittaufnahmen der schlagfest modifizierten Polymerisate erfolgen (vgl. F. Lenz, Zeitschrift für Wiss. Mikroskopie, 63 [1956], S. 50/56).

Die Einstellung der Teilchengröße der dispersen Weichkomponenten-Phase erfolgt dabei in an sich bekannter Weise bei der Polymerisation der monovinylaromatischen Verbindungen durch Anpassen der Rührgeschwindigkeit im ersten Abschnitt der Polymerisation, d. h. bis zu einem Umsatz der Monomeren von gleich oder kleiner als 45%. Dabei ist die Teilchengröße der dispersen Weichkomponenten-Phase um so größer, je kleiner die Rührerdrehzahl und damit je kleiner die Scherbeanspruchung ist. Der Zusammenhang zwischen der Rührgeschwindigkeit und der Größe und Verteilung der Kautschukteilchen im resultierenden schlagfesten Polymerisat ist z. B. in der zitierten Arbeit von Freeguard beschrieben, auf welche hinsichtlich weiterer Einzelheiten verwiesen wird. Die betreffende notwendige Rührgeschwindigkeit zur Erzielung der gewünschten Teilchengröße der dispersen Weichkomponenten-Phase hängt unter anderem an den jeweiligen Apparateverhältnissen ab und ist dem Fachmann bekannt bzw. läßt sich durch ein paar einfache Versuche bestimmen.

Die mittlere Teilchengröße (Gewichtsmittel) der dispersen Weichkomponenten-Phase wurde bestimmt durch Auszählen und Mitteln der zur gleichen Größenklasse (konst. Interwallbreite) gehörigen Teilchen aus elektronenmikroskopischen Dünnschichtaufnahmen. Mit den Volumina der Teilchen (3. Potenz des scheinbaren Durchmessers) innerhalb der Intervalle wird die Verteilungssummenkurve bestimmt. Beim 50%-Ordinatenwert kann auf der Abszisse der Äquivalentdurchmesser dann abgegriffen werden. Die angegebenen mittleren Durchmesser stellen dabei einen Mittelwert von mindestens 5000 Teilchen dar.

Zur Bestimmung des Weichkomponentenanteils wird das schlagfest modifizierte Polystyrol bei Raumtemperatur in Methylethylketon/Aceton (Volumenverhältnis 1 : 1) gelöst; der unlösliche Gelanteil wird bei 30 000 g abgeschleudert und nach Dekantieren der Lösung, isoliert, getrocknet und gewogen.

Der Weichkomponentenanteil wird wiedergegeben durch das Verhältnis

$$G = \frac{\text{Trockengewicht des Gels}}{\text{Einwaage an Polymeren}} \cdot 100 \text{ Gew.-\%}$$

Dieser Weichkomponentenanteil (auch »Gelgehalt«) muß erfindungsgemäß höher liegen als 27%.

Bei den Polyphenylenethern handelt es sich um Verbindungen auf der Basis von in ortho-Position disubstituierten Polyphenylenoxiden, wobei der Ethersauerstoff der einen Einheit an den Benzolkern der benachbarten Einheit gebunden ist. Dabei sollen mindestens 50 Einheiten miteinander verknüpft sein. Die Polyphenylenether können in ortho-Stellung zum Sauerstoff Wasserstoff, Halogen, Kohlenwasserstoffe, die kein $\alpha$-ständiges tert.-Wasserstoffatom besitzen, Halogenkohlenwasserstoffe, Phenylreste und Kohlenwasserstoff-oxi-Reste tragen. So kommen in Frage: Poly(2,6-dichlor-1,4-phenylen)-ether, Poly(2,6-diphenyl-1,4-phenylen)ether, Poly(2,6-dimethoxy-1,4-phenylen)ether, Poly(2,6-dimethyl-1,4-phenylen)ether, Poly(2,6-dibrom-1,4-phenylen)ether. Bevorzugterweise wird der Poly(2,6-dimethyl-1,4-phenylen)ether eingesetzt. Besonders bevorzugt werden Poly(2,6-dimethyl-1,4-phenylen)ether mit einer Grenzviskosität zwischen 0,45 und 0,65 dl/g (gemessen in Chloroform bei 30°C).

Die Polyphenylenether können z. B. in Gegenwart von komplexbildenden Mitteln wie Kupferbromid und sek.-Dibutylamin aus den Phenolen hergestellt werden.

Die Mischungen aus den schlagzäh modifizierten Styrolpolymerisaten und Polyphenylenethern können außerdem weitere Zusatzstoffe wie Pigmente, Farbstoffe, Füllstoffe, Flammschutzmittel, weitere verträgliche Polymere, Antistatika, Antioxidantien und Schmiermittel enthalten.

Man stellt die erfindungsgemäßen thermoplastischen Formmassen wie üblich auf Vorrichtungen, die ein homogenes Mischen zulassen, wie Knetern, Extrudern oder Walzenmischgeräten her. Neben der hohen Kältezähigkeit haben die Formmassen weitere gute Eigenschaften, wie eine hohe Wärmeformbeständigkeit. Sie führen außerdem zu Fertigteilen mit einem hohen Glanz.

### Beispiele und Vergleichsversuche

Ein schlagfestes Polystyrol mit einem Weichkomponentenanteil von 29 Gew.-% wird nach folgendem Verfahren erhalten:

In einer 2-Kessel-2-Turmkaskade wurde eine Mischung von 7,2 Gew.-Teilen eines Polybutadiens mit einem cis-Anteil von 28% zusammen mit 85,7 Gew.-Teilen Styrol, 6 Gew.-Teilen Ethylbenzol und 0,1 Teilen Octadecyl-3-(3',5'-di-tert.-butyl-4'-hydroxiphenyl)-propionat thermisch polymerisiert. Der Durchsatz betrug 4 l/Stunde. Die in den einzelnen Reaktoren angewendeten Rührgeschwindigkeiten, Temperaturen sowie die eingestellten integralen Umsätze sind unten aufgeführt. In den dritten Reaktor wurden dem Polymerstrom 0,02 Gew.-% tert.-Dodecylmercaptan, bezogen auf Styrol, kontinuierlich zudosiert. Die Polymerisatmischung wurde nach der Polymerisation in einer Entgasungszone bei 220 bis 240°C vom Lösungsmittel und Restmonomeren befreit.

| Ort | Rührgeschwindigkeit Upm | Temperatur °C | Umsatz (Integral) |
|-----|--------------------------|----------------|--------------------|
| 1. Rührreaktor | 100 | 104 | 3,8 |
| 2. Rührreaktor | 160 | 132 | 20,3 |
| 1. Turm | 15 | 101 | 55,3 |
| 2. Turm | 3 | 127 | 84,3 |
| Entgasung | — | 250 | — |

Einschlagfestes Polystyrol mit einem Weichkomponentenanteil von 25 Gew.-% wird nach folgendem Verfahren erhalten:

In einer 2-Kessel-Turmkaskade wurde eine Mischung von 62 Gew.-Teilen eines Polybutadiens mit einem cis-Anteil von 28%, zusammen mit 85,7 Gew.-Teilen Styrol, 6 Gew.-Teilen Ethylbenzol und 0,1 Teilen Octadecyl-3-(3',5'-di-tert.-butyl-4'-hydroxiphenyl)-propionat thermisch polymerisiert. Der Durchsatz betrug 4 l/Stunde. Die in den einzelnen Reaktoten angewendeten Rührgeschwindigkeiten, Temperaturen sowie die eingestellten integralen Umsätze sind unten aufgeführt. In den dritten Reaktor wurden dem Polymerstrom 0,02 Gew.-% tert.-Dodecylmercaptan, bezogen auf Styrol, kontinuierlich zudosiert. Die Polymerisatmischung wurde nach der Polymerisation in einer Entgasungszone bei 220 bis 240° C vom Lösungsmittel und Restmonomeren befreit.

| Ort | Rührgeschwindigkeit Upm | Temperatur °C | Umsatz (Integral) |
|-----|--------------------------|----------------|--------------------|
| 1. Rührreaktor | 100 | 104 | 3,8 |
| 2. Rührreaktor | 160 | 132 | 20,3 |
| 1. Turm | 15 | 101 | 55,3 |
| 2. Turm | 3 | 127 | 84,3 |
| Entgasung | — | 250 | — |

Die in der Tabelle angegebenen Gewichtsteile schlagfest modifizierten Polystyrol und von Poly(2,6-dimethyl-1,4-phenylen)ether wurden mit jeweils 0,8 Gew.-Teilen Tris(nonylphenyl)phosphit und 1,5 Gew.-Teilen Polyethylen auf einem 2-Wellen-Extruder bei 280° C geschmolzen, homogenisiert, gemischt und granuliert. Das Poly(2,6-dimethyl-1,4-phenylen)ether hatte eine Grenzviskosität von 50 gl/g.

Aus den Mischungen wurden mittels einer Spritzgußmaschine bei 280° C Prüfkörper hergestellt. An diesen Prüfkörpern wurde nach DIN 53 443, Blatt 1 die Bruchenergie bei −20° C bestimmt.

Tabelle

| | Schlagfest modifiziertes Polystyrol[1]) | | Poly-(2,6-dimethyl-1,4-phenylen)-ether (Gew.-Teile) | Bruch-energie bei −20°C Nm |
|---|---|---|---|---|
| | Weichkompo-nentenanteil (Gew.-%) | Gew.-Teile in der Mischung | | |
| Beispiele (erfindungsgemäß) | | | | |
| 1 | 29 | 75 | 25 | 14,3 |
| 2 | 29 | 65 | 35 | 19,0 |
| 3 | 29 | 55 | 45 | 24,6 |

5

Fortsetzung

| | Schlagfest modifiziertes Polystyrol[1] | | Poly-(2,6-dimethyl-1,4-phenylen)-ether | Bruch-energie bei −20° C |
| | Weichkompo-nentenanteil (Gew.-%) | Gew.-Teile in der Mischung | (Gew.-Teile) | Nm |
|---|---|---|---|---|
| Vergleichsversuche (nicht erfindungsgemäß | | | | |
| A | 25 | 75 | 25 | 8,0 |
| B | 25 | 65 | 35 | 11,5 |
| C | 25 | 55 | 45 | 16,2 |

[1]) Schlagfest modifiziertes Polystyrol mit einer mittleren Teilchengröße von 1 µm.


**Patentanspruch**

Thermoplastische Formmassen, enthaltend

A   90 bis 10 Gew.-Teile wenigstens eines schlagfest modifizierten Styrolpolymerisats,
B   10 bis 90 Gew.-Teile eines Polyphenylenethers, sowie
C   — gegebenenfalls — einschlägig übliche Zusatzstoffe in wirksamen Mengen,

dadurch gekennzeichnet, daß der Anteil an Weichkomponente im schlagfest modifizierten Styrolpolymerisat A zwischen 27 und 40 Gew.-%, bezogen auf das schlagfest modifizierte Polymerisat, liegt, wobei unter Weichkomponente der in Methylethylketon/Aceton (Volumenverhältnis 1 : 1) unlösliche Anteil des schlagfest modifizierten Polystyrols verstanden wird.


**Claim**

A thermoplastic moulding composition containing

(A)   90 to 10 parts by weight of at least one styrene polymer which has been made impact-resistant,
(B)   10 to 90 parts by weight of a polyphenylene ether, and
(C)   if desired, usually used additives in effective amounts,

wherein styrene polymer A which has been made impact-resistant contains from 27 to 40% by weight of soft component, »soft component« being understood to mean that portion of the impact-resistant polystyrene which is insoluble in a mixture of methyl ethyl ketone and acetone (volumetric ratio 1 : 1).


**Revendication**

Matières à mouler thermoplastiques, contenant

A   90 à 10 parties en poids d'au moins un polymérisat styrénique, modifié pour résister aux chocs,
B   10 à 90 parties en poids d'un poly(éther de phénylène) et éventuellement
C   das additifs usuels en des proportions efficaces,

caractérisées en ce que la proportion de la composante souple dans le polymérisat styrénique A, modifié pour résister aux chocs, à savoir la fraction du polystyrène modifié pour résister aux chocs insoluble dans un mélange 1 : 1 (en volumes) de méthyl-éthyl-cétone et d'acétone, se situe entre 27 et 40% du poids du polymérisat modifié.